# EUROPEAN PATENT APPLICATION

(11) **EP 4 760 142 A1**
(43) Date of publication of application: **17.06.2026**
(21) Application number: 24851640.3
(22) Date of filing: 26.07.2024
(51) Int. Cl.: F21S 41/683, F21S 41/153, F21S 41/663, F21V 11/10

(54) **VEHICULAR LIGHTING FIXTURE**

(30) Priority: 07.08.2023 JP 2023128411
(71) Applicant: Koito Manufacturing Co., Ltd., Shinagawa-ku, Tokyo 141-0001 (JP)
(72) Inventor: ITO, Tatsuki, Shizuoka-shi, Shizuoka 424-8764 (JP)
(74) Representative: Zimmermann, Tankred Klaus
(86) International application number: PCT/JP2024/026781
(87) International publication number: WO 2025/033215

(57) **Abstract**

Provided is a vehicular lighting fixture capable of reducing influence of aberration and heat in a projection lens and projecting a light pattern with high accuracy. The vehicular lighting fixture includes a projection lens (2) that projects light emitted from a light source (3) to project a required light distribution pattern. The projection lens (2) includes, in this order from the side opposite to the light source (3), a first lens (21) and a second lens (22) made of resin, and a third lens (23) and a fourth lens (24) made of glass. A diaphragm (25) that limits the diameter of the projected light is disposed between the second lens (resin lens) (22) and the third lens (glass lens). By squeezing the diaphragm (25), the aberration of the projection lens (2) is reduced. Further, the diaphragm (25) reduces transfer of heat of the light source (3) from the third lens (23) side toward the second lens (22) side.

## Description

### TECHNICAL FIELD

The present invention relates to a lighting fixture used for a vehicle such as an automobile, and particularly relates to a vehicular lighting fixture suitable for application to a headlight (head lamp) that performs adaptive driving beam (ADB) light distribution control.

### BACKGROUND ART

For a headlight (head lamp) of a vehicle such as an automobile, ADB light distribution control has been proposed as a technique for controlling light distribution. The ADB light distribution control is a technique of controlling light distribution so as not to dazzle other vehicles such as oncoming vehicles and preceding vehicles and pedestrians, which are detected from, e.g., an image captured by a camera. As one of the head lamps that perform the ADB light distribution control, a head lamp using a multi-divided light emitting element (multi-divided LED array) in which µm-order micro LEDs are arranged in a matrix as a light source has been proposed.

For example, Patent Literature 1 proposes a technique of using a multi-divided LED array also referred to as a micro LED array as a light source and projecting light emitted from the multi-divided LED array by an optical system to form a light distribution pattern. In this technique, the light emitting surface of the micro LED having emitted light is projected to form a unit light pattern, and the light patterns of the plurality of micro LEDs are synthesized to form a desired light distribution pattern. Thus, selective light emission control of the micro LEDs enables ADB light distribution control with a desired light distribution pattern.

### CITATION LIST

### PATENT LITERATURE

Patent Literature 1: JP-A-2021-068513

### SUMMARY OF INVENTION

### PROBLEMS TO BE SOLVED BY INVENTION

In such ADB light distribution control, it is preferable to project the unit light pattern of the micro LED to be projected as a light pattern in an accurate shape, that is, a light pattern corresponding to the shape of the light emitting surface. However, when aberration occurs in a projection lens, the shape of the unit light pattern of the micro LED to be projected is changed, and it becomes difficult to control projection of the light distribution pattern obtained by synthesizing these patterns, that is, perform the ADB light distribution control with high accuracy. In addition, the projection lens is thermally deformed by heat generated when the light source emits light, and the shape of the light pattern to be projected is affected. In particular, such an influence is more noticeable in a projection lens including a resin lens.

In Patent Literature 1, the projection lens includes a plurality of lenses (triplet lenses), and the aberration of the projection lens is reduced. However, when a wide region in front of the automobile is illuminated in the ADB light distribution control, light which passes through a peripheral edge region of the projection lens among the light emitted from the micro LEDs, that is, light which enters the projection lens at a large angle with respect to an optical axis, is not a little, and it is difficult to reduce coma aberration caused by such light.

In addition, in Patent Literature 1, the lens on the side close to the light source is a glass lens, and the lens on the side opposite to the light source is a resin lens, so that the resin lens is less likely to be affected by heat therein. However, it is difficult to reduce heat transfer to the resin lens through the glass lens, particularly, to reduce heat transfer due to radiation, and it is difficult to prevent the influence of heat on the shape of the light pattern.

An object of the present invention is to provide a vehicular lighting fixture capable of reducing influence of aberration and heat in a projection lens and projecting a light pattern with high accuracy.

### SOLUTION TO PROBLEMS

A vehicular lighting fixture of the present invention is a vehicular lighting fixture including a light source, and a projection lens that projects light emitted from the light source to project a required light distribution pattern, in which the projection lens includes a resin lens and a glass lens, the resin lens and the glass lens are disposed from the side opposite to the light source, and a diaphragm that limits the diameter of the projected light is disposed between the glass lens and the resin lens.

For example, preferably, the projection lens includes, in this order from the side opposite to the light source, a first lens having a positive refractive power, a second lens having a negative refractive power, and a third lens and a fourth lens having a positive refractive power, the first lens and the second lens are made of resin, the third lens and the fourth lens are made of glass, and the diaphragm is disposed between the second lens and the third lens. Here, each of the third lens and the fourth lens is a plano-convex spherical lens, and the spherical surfaces of the third lens and the fourth lens face each other. The focal length of the third lens is preferably longer than the focal length of the fourth lens.

The diaphragm is preferably formed of a member having a lower thermal conductivity than that of glass and resin. The diaphragm preferably includes a variable diaphragm having a variable diaphragm opening diameter, and a diaphragm value is changed according to a light distribution pattern to be projected.

### EFFECTS OF INVENTION

According to the present invention, it is possible to provide the vehicular lighting fixture capable of reducing the aberration in the projection lens and reducing the influence of heat on the light pattern and capable of implementing particularly the ADB light distribution control with high accuracy.

### BRIEF DESCRIPTION OF DRAWINGS

Fig. 1 is a perspective view of an automobile including a head lamp to which the present invention is applied and a schematic configuration of the head lamp.
Fig. 2 is a schematic perspective view of an ADB lamp unit.
Fig. 3 is a schematic longitudinal sectional view of the ADB lamp unit.
Fig. 4 is a block circuit diagram of an ADB control system.
Fig. 5 is a schematic view of a light distribution pattern. Fig. 5(a) shows a low beam light distribution pattern PLo, Fig. 5(b) shows an ADB light distribution pattern PA, Fig. 5(cl) shows a portion c1 in the case of the low beam light distribution pattern PLo in closeup, and Fig. 5(c2) shows a portion c2 in the case of the ADB light distribution pattern PA in closeup.
Fig. 6 is a schematic sectional view of a projection lens in a different form.

### DESCRIPTION OF EMBODIMENTS

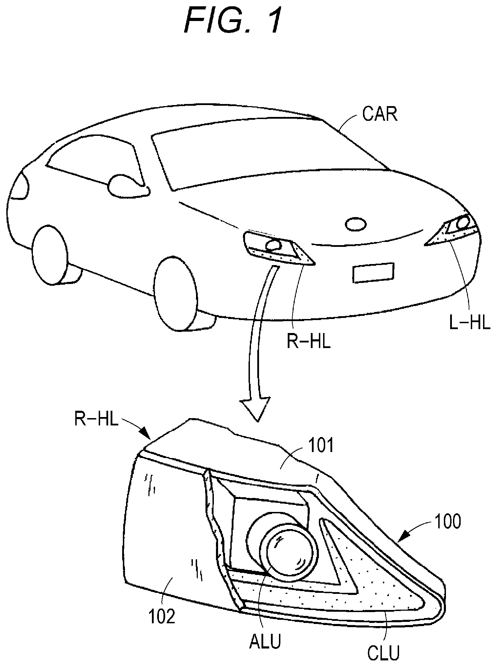

Next, an embodiment of the present invention will be described with reference to the drawings. Fig. 1 shows a schematic configuration of an automobile including a head lamp to which the present invention is applied and a schematic perspective view of the head lamp. Right and left head lamps R-HL, L-HL are attached to right and left front portions of a vehicle body of an automobile CAR, respectively. Each of the head lamps R-HL, L-HL includes an ADB lamp unit ALU capable of performing ADB light distribution control and a clearance lamp unit CLU, which are integrally disposed in a lamp housing 100.

The right and left head lamps R-HL, L-HL are configured bilaterally symmetrical, and Fig. 1 shows an enlarged partially-cutaway perspective view the right head lamp R-HL. The lamp housing 100 includes a lamp body 101 opened forward of the automobile and a translucent cover 102 attached to such an opening, and the ADB lamp unit ALU and the clearance lamp unit CLU are disposed in the lamp housing 100.

As will be described in detail later, the ADB lamp unit ALU is configured to project an ADB light distribution pattern by irradiating a front region of the automobile with light emitted from a light source with a projection lens. In this form, the ADB lamp unit ALU is capable of projecting a light distribution pattern including a low beam light distribution and a high beam light distribution. The clearance lamp unit CLU also serves as a turn signal lamp, a daytime running lamp, or the like. The clearance lamp unit CLU has a configuration using a light guide, but is less related to the present invention, and therefore, a detailed description thereof will be omitted.

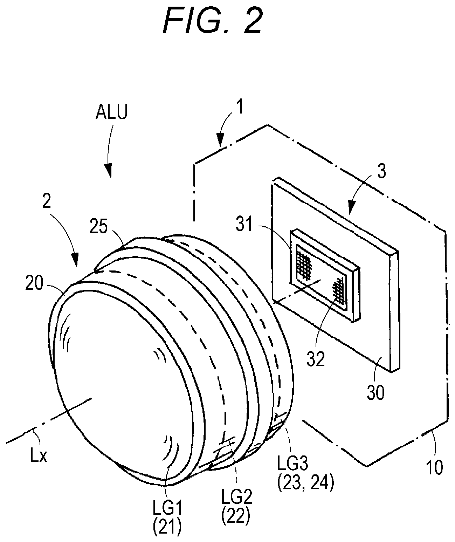

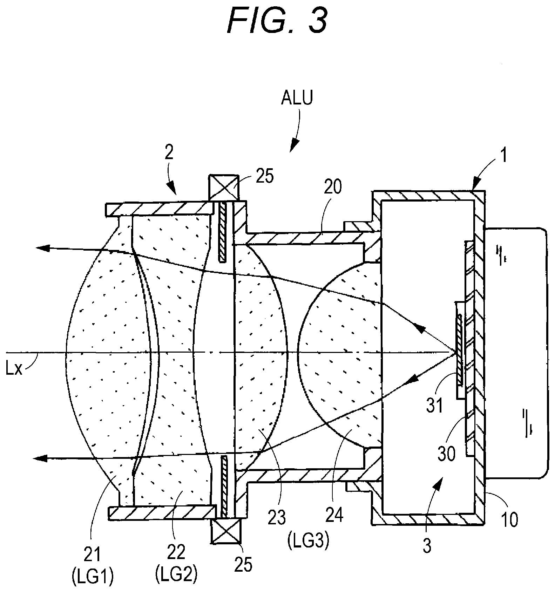

Fig. 2 is a perspective view of a schematic configuration of the ADB lamp unit ALU, and Fig. 3 is a longitudinal sectional view thereof. A unit case 1 also serves as a heat sink 10, and a light source 3 is disposed therein. The light source 3 includes a micro light emitting diode (LED) array 31 as a light source, and the micro LED array 31 is mounted on a light source substrate 30 internally supported by the unit case 1. In the micro LED array 31, many micro LEDs 32 that emit white light are arranged vertically and horizontally in a matrix, and any of these micro LEDs selectively emits light under the control of an ADB control circuit 41 to be described later.

A projection lens 2 has a lens configuration in which a plurality of lens groups is incorporated into a lens barrel 20. Basically, the projection lens 2 is configured as a triplet lens, and includes a first lens group LG1, a second lens group LG2, and a third lens group LG3 in this order from the front side of the lamp. The first lens group LG1 includes a first lens 21 which is a biconvex lens having a positive refractive power. The second lens group LG2 includes a second lens 22 which is a biconcave lens having a negative refractive power. The third lens group LG3 includes a synthetic lens (combination lens) of a third lens 23 and a fourth lens 24 which are plano-convex lenses, and is configured as a lens having a positive refractive power as a whole.

Of the four lenses 21 to 24 forming the projection lens 2, the first lens 21 and the second lens 22 are made of translucent resin. For example, the first lens 21 is made of acrylic resin (PMMA), and the second lens 22 is made of polycarbonate resin (PC). The third lens 23 and the fourth lens 24 are made of translucent glass, and are made of borosilicate crown glass (N-K9L), for example.

Here, the first lens 21 and the second lens 22 are designed such that each of the convex and concave surfaces thereof is aspherical. Each of the third lens 23 and the fourth lens 24 is a plano-convex spherical lens, and the spherical surfaces thereof face each other. In addition, the positive refractive power (refractive power) of the first lens 21 is set to a value close to the negative refractive power of the second lens 22. The third lens 23 is a lens having a focal length longer than that of the fourth lens 24, whereby the refractive power of the fourth lens 24 is made larger than that of the third lens 23, and the entire third lens group LG3 including these lenses has a lens configuration with a positive refractive power in a light emission direction as described above. By forming each of the lenses 21 to 24 in this manner, aberrations in the projection lens 2, that is, chromatic aberration, spherical aberration, astigmatism, and coma aberration, are reduced. Among these aberrations, a configuration relating to the coma aberration will be described later.

Further, in the projection lens 2, a diaphragm 25 is disposed between the second lens 22 and the third lens 23. Although not shown in detail, the diaphragm 25 has a configuration in which, for example, a plurality of diaphragm blades is arranged in a circumferential direction in a diaphragm ring attached to the lens barrel 20, each diaphragm blade is tilted by rotationally driving the diaphragm ring by a diaphragm driver, and the diameter of a diaphragm opening formed by these diaphragm blades is changed. Furthermore, the diameter of light transmitted through the projection lens 2 (the diameter dimension of a light flux) is changed. Alternatively, a plurality of diaphragm plates may be moved in a radial direction to change the diameter of the diaphragm opening.

The diaphragm 25 is formed of a member having a lower thermal conductivity than that of resin or glass forming the lenses 21 to 24. The diaphragm blades of the diaphragm 25 shield between both peripheral edge portions of the second lens 22 and the third lens 23, and are designed such that the F value (F number) of the entire projection lens 2 is at least 0.7 or less when the diaphragm blades are fully opened. When the diaphragm 25 is driven to reduce the diameter of the diaphragm opening, a peripheral edge region of the projection lens 2 is shielded from light to be in a so-called squeezed state, and the F value of the entire projection lens 2 increases.

The first lens 21 to the fourth lens 24 described above are internally supported by the lens barrel 20 in a state in which the lens optical axes are coincident with each other, and such an optical axis is configured as a lens optical axis Lx over the entire projection lens 2. The lens barrel 20 is attached to the unit case 1 of the ADB lamp unit ALU in a state in which the rear focal point of the projection lens 2 is disposed at a position extremely close to the light emitting surface of the micro LED array 31.

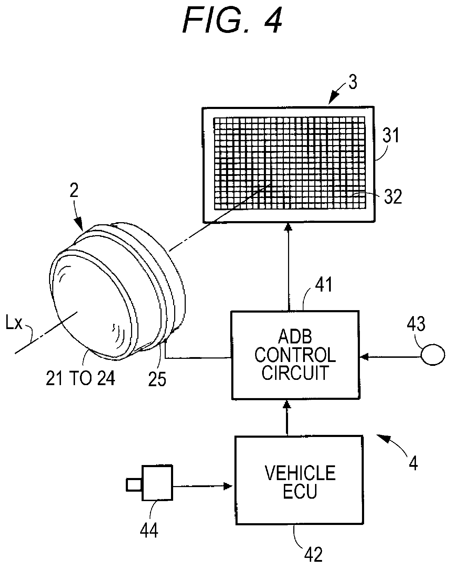

Fig. 4 is a block circuit diagram of an ADB control system 4 in the ADB lamp unit ALU. A lighting control switch 43 to be operated by a driver is connected to the ADB control circuit 41, and when the lighting control switch 43 is set and operated, the ADB control circuit 41 controls light emission from the micro LED array 31. A vehicle electronic control unit (ECU) 42 to which an in-vehicle camera 44 is connected is connected to the ADB control circuit 41, and the vehicle ECU 42 detects a front vehicle present in a front region based on an image of the front region of the automobile captured by the in-vehicle camera 44. The ADB control circuit 41 is configured to perform ADB light emission control on the micro LED array 31 so as not to dazzle the front vehicle detected by the vehicle ECU 42 when the ADB control is set. Further, the diaphragm driver of the diaphragm 25 provided in the projection lens 2 is connected to the ADB control circuit 41, and the diaphragm opening of the diaphragm 25 is controlled by setting via the lighting control switch 43.

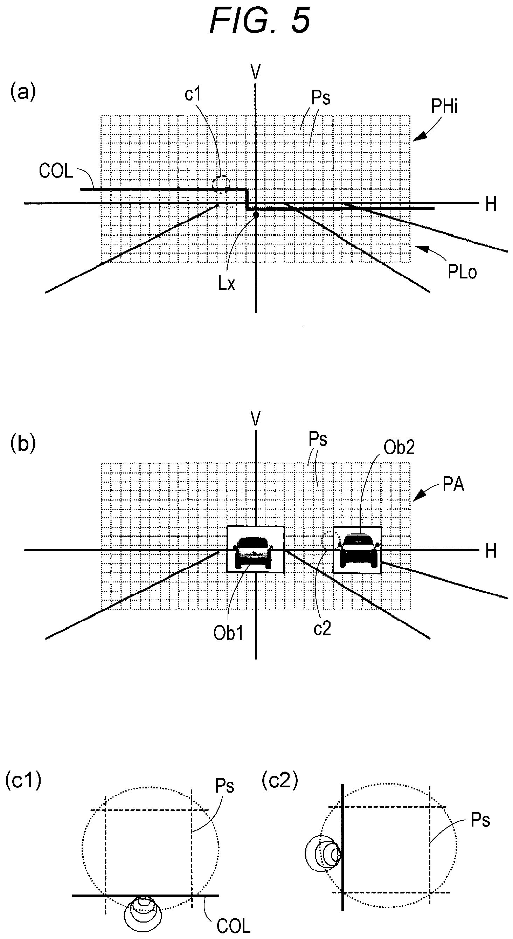

In the head lamp HL of Embodiment 1 including the projection lens 2 having the above configuration, the light distribution is controlled by the setting of the lighting control switch 43 by the driver. For example, when the high beam light distribution is set, the ADB control circuit 41 causes substantially all of the micro LEDs 32 of the micro LED array 31 to emit light, and as schematically shown in Fig. 5(a), light patterns Ps of the micro LEDs 32 are combined to project a high beam light distribution pattern PHi. When the lighting control switch 43 is set to the low beam light distribution, light emission from the micro LED array 31 is controlled such that the light patterns Ps below a cutoff line COL of Fig. 5(a) are projected. As a result, a low beam light distribution pattern PLo is projected. In this figure, V is a vertical line passing through the optical axis Lx of the projection lens, and H is a horizontal line passing through an angular position slightly above the optical axis Lx.

When the lighting control switch 43 is set to the ADB light distribution control, the vehicle ECU 42 detects a preceding vehicle Ob1 and an oncoming vehicle Ob2 as front vehicles present in the front region of the automobile based on the image captured by the in-vehicle camera 44. When no front vehicle is detected, the ADB control circuit 41 controls light emission from the micro LED array 31 to project the high beam light distribution pattern PHi of Fig. 5(a).

When the front vehicle is detected, the ADB control circuit 41 projects an ADB light distribution pattern PA in which light from the micro LEDs corresponding to an illumination region overlapping with the detected front vehicle is reduced or shielded. That is, in the ADB light distribution pattern PA, as shown in Fig. 5(b), light in the illumination region in which the front vehicles Ob1, Ob2 are present is selectively reduced or shielded to prevent dazzling of the front vehicles Ob1, Ob2. In the illumination region where the front vehicles Ob1, Ob2 are not present, the light patterns Ps of the light emitted from the micro LEDs 32 are projected, the corresponding region is illuminated with a predetermined brightness, and the ADB light distribution control with an enhanced visibility is executed.

Here, in projection of the low beam light distribution pattern PLo and the high beam light distribution pattern PHi, it is less necessary to highly control the sharpness of the boundary of a peripheral edge portion of the light distribution pattern, so that the influence of the aberration on the light distribution pattern can be ignored. Thus, at this time, the diaphragm 25 is set to a fully opened state or a state close to the fully opened state, and the projection lens 2 is set to a low F value. As a result, the brightness of the lens in the projection lens 2, that is, the amount of transmitted light, is increased, and a bright light distribution pattern for effective use of light emitted from the micro LED array 31 can be projected.

On the other hand, in projection of the ADB light distribution pattern PA, it is required to project the light pattern Ps of each of the many micro LEDs with high accuracy. That is, as shown in Fig. 5(b), it is required to sharpen a boundary between a region where the front vehicles Ob1, Ob2 are present and light is shielded or reduced and a region where these vehicles are not present and which is illuminated. When the boundary is unclear, there is a possibility that part of the light pattern is emitted to the front vehicles Ob1, Ob2 to dazzle occupants in the front vehicles. In this case, the influence of the coma aberration caused in the projection lens 2 cannot be ignored.

In the projection lens 2 of the embodiment, the diaphragm 25 is disposed between the second lens 22 and the third lens 23, and by squeezing the diaphragm 25 to reduce the opening diameter, transmission of light at a lens peripheral edge portion of the projection lens 2 can be shielded or reduced. Thus, a percentage of light transmitted through the lens peripheral edge portion, where an incident angle is relatively large with respect to the optical axis Lx of the projection lens 2, contributing to formation of the light pattern PA decreases, and the coma aberration caused by the light transmitted through the lens peripheral edge portion can be reduced. As a result, the boundary of the light pattern Ps of the micro LED can be sharply projected, and the ADB light distribution control can be achieved with high accuracy.

In a case where the coma aberration in the projection lens 2 cannot be completely prevented, it is preferable to design the projection lens 2 such that inward coma aberration (coma aberration having a tail in an optical axis direction) remains. For example, as described in JP-A-2017-16928, the inward coma aberration can be controlled by making the curvature of a principal surface of the projection lens larger than the curvature of an arc passing through a principal point with the focal point as the center.

By applying such a design to the projection lens 2, the coma aberration caused in the light pattern Ps of each micro LED 32 is controlled to the inward coma aberration. As a result, at the boundary between the illumination region and the light shielding region of the light pattern, the boundary at which the inside facing the center of the light distribution pattern is the illumination region and the outside is the light shielding region can be sharpened. For example, in the case of the low beam light distribution pattern PLo of Fig. 5(a), as shown in Fig. 5(c1) at which a portion c1 is enlarged, the boundary of the light pattern Ps, that is, the cutoff line COL, can be sharply projected due to the inward coma aberration.

In the case of the ADB light distribution pattern PA of Fig. 5(b), as shown in Fig. 5(c2) in which a portion c2 is enlarged, even if the inward coma aberration is caused at the boundary between the illumination region and the light shielding region, it is possible to reduce a margin with the front vehicle Ob2, that is, a margin for preventing the illumination region from overlapping with the front vehicle. Thus, it is possible to expand the illumination region on the subject vehicle side by bringing the boundary closer to the front vehicle Ob2 side, and safety when the subject vehicle travels is enhanced.

Considering the environmental temperature of the projection lens 2, when light from the micro LED array 31 is shielded, the temperature of the projection lens 2 is substantially equal to an outside air temperature, and is approximately 0°C to 40°C. On the other hand, when the micro LED array 31 emits light, the temperature of the projection lens 2 increases to about 80°C due to heat generated in the micro LED array 31. Thus, the fourth lens 24 and the third lens 23 close to the micro LED array 31 are easily affected by such heat, but the third lens 23 and the fourth lens 24 are the glass lenses, and the thermal expansion coefficient thereof is about 2 orders of magnitude smaller than that of resin, so that the influence on the refractive power can be ignored.

On the other hand, the first lens 21 and the second lens 22 are easily affected by the heat via the third lens 23, and in particular, the heat is transferred through the lens barrel 20 supporting each lens. The diaphragm 25 is disposed between the second lens 22 and the third lens 23 in the lens barrel 20, and heat transfer through the lens barrel 20 is reduced by the diaphragm 25. In particular, when the diaphragm 25 is formed of a member having a low thermal conductivity, an effect of reducing heat transfer is enhanced.

Heat transfer by radiation from the third lens 23 to the second lens 22 is also taken into consideration, and in particular, the second lens 22 which is the biconcave lens and the third lens 23 which is the plano-convex lens are brought close to each other in respective peripheral edge regions, and heat transfer in these peripheral edge regions is taken into consideration. In the diaphragm 25 disposed in the projection lens 2, the diaphragm blades of the second lens 22 and the third lens 23 extend to the peripheral edge regions, transfer of radiant heat in these peripheral edge regions is reduced. Thus, the influence of heat on the refractive power of the first lens 21 and the second lens 22 which are the resin lenses can also be ignored. As described above, it is possible to reduce the influence of heat in the projection lens 2 on the light distribution pattern, particularly the influence on the ADB light distribution pattern, and to achieve the ADB light distribution control with high accuracy.

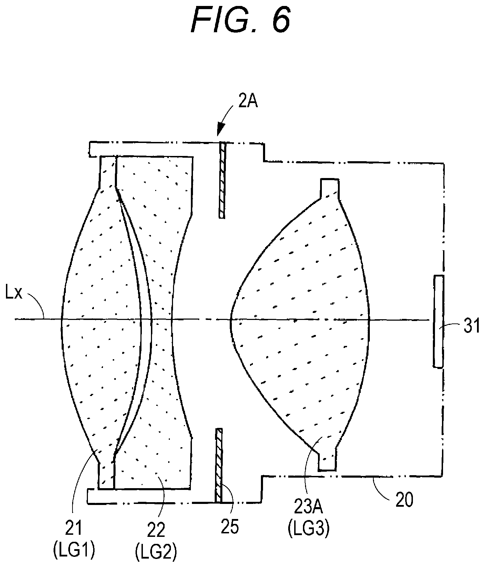

In the present invention, the third lens group LG3 of the projection lens 2 may include one lens. That is, as shown in the configuration of a projection lens 2A in Fig. 6, the first lens 21 of the first lens group LG1 and the second lens 22 of the second lens group LG2 have the same configuration, but the third lens group LG3 includes a third lens 23A which is a biconvex lens having a positive refractive power. When the first lens 21 and the second lens 22 have the same configuration as that of the embodiment, the third lens 23A is configured as a lens equivalent to a synthetic lens obtained by synthesizing the third lens 23 and the fourth lens 24 of the embodiment. By designing the lenses in this manner, it is possible to obtain the projection lens 2A having features and effects similar to those of the embodiment.

The total number of lenses of the projection lens 2A can be reduced, and therefore, a simple structure can be expected. On the other hand, the projection lens 2A needs to be designed such that the shape of the biconvex surface of the third lens 23A is aspherical when the coma aberration is controlled, which may make it difficult to design and manufacture the projection lens 2A. On the other hand, in the projection lens of the above embodiment, the third lens group LG3 is configured as the synthetic lens of the third lens 23 and the fourth lens 24, and therefore, each lens surface of the third lens 23 and the fourth lens 24 can be designed as a spherical surface, and design and manufacturing can be facilitated. In addition, the spherical surfaces of the third lens 23 and the fourth lens 24 face each other, and therefore, the design for reducing the aberration is also facilitated.

Here, in the ADB lamp unit of the embodiment, the example where the light source is formed of the micro LED array, that is, the multi-divided LEDs, to form the ADB light distribution has been described, but the present invention can also be applied to a lamp using a micro electro mechanical systems (MEMS) mirror array as a light source. Alternatively, the present invention is not limited to the lamp having the configuration in which light from the light source is directly projected by the projection lens, and can also be applied to a lamp using a projection lens that projects light optically scanned (scanned) with reflected light from a rotating mirror and a swing mirror.

The present international application claims priority based on Japanese Patent Application No. 2023-128411 filed on August 7, 2023, and the entire contents of Japanese Patent Application No. 2023-128411 are incorporated herein by reference.

The description of the specific embodiments of the present invention is presented for the purpose of illustration. The specific embodiments are not intended to be exhaustive or to limit the invention as it is in the form described. It is obvious to those skilled in the art that many modifications and alterations are possible in light of the contents of the description above.

### LIST OF REFERENCE SIGNS

- 1: ADB Lamp Unit
- 2, 2A: Projection Lens
- 3: Light Source
- 4: ADB Control System
- 10: Heat Sink
- 20: Lens Barrel
- 21 to 24: First Lens to Fourth Lens
- 25: Diaphragm
- 30: Substrate
- 31: Micro LED Array
- 32: Micro LED
- 41: ADB Control Circuit
- 42: Vehicle ECU
- 43: Lighting Control Switch
- 44: In-Vehicle Camera
- L-HL, R-HL: Head Lamp
- LG1 to LG3: First to Third Lens Group
- PHi: High Beam Light Distribution Pattern
- PLo: Low Beam Light Distribution Pattern
- PA: ADB Light Distribution Pattern
- Ps: Light Pattern (Micro LED)
- Ob1, Ob2: Front Vehicle

## Claims

1. A vehicular lighting fixture comprising: a light source; and a projection lens that projects light emitted from the light source to project a required light distribution pattern, wherein the projection lens includes a resin lens and a glass lens, the resin lens and the glass lens are disposed from a side opposite to the light source, and a diaphragm that limits a diameter of projected light is disposed between the glass lens and the resin lens.

2. The vehicular lighting fixture according to claim 1, wherein the projection lens includes, in this order from the side opposite to the light source, a first lens having a positive refractive power, a second lens having a negative refractive power, and a third lens and a fourth lens having a positive refractive power, the first lens and the second lens are made of resin, the third lens and the fourth lens are made of glass, and the diaphragm is disposed between the second lens and the third lens.

3. The vehicular lighting fixture according to claim 2, wherein each of the third lens and the fourth lens is a plano-convex spherical lens, and spherical surfaces of the third lens and the fourth lens face each other.

4. The vehicular lighting fixture according to claim 3, wherein a focal length of the third lens is longer than a focal length of the fourth lens.

5. The vehicular lighting fixture according to claim 1, wherein the projection lens includes, in this order from the side opposite to the light source, a first lens having a positive refractive power, a second lens having a negative refractive power, and a third lens having a positive refractive power, the first lens and the second lens are made of resin, and the third lens is made of glass.

6. The vehicular lighting fixture according to claim 1, wherein the diaphragm is formed of a member having a lower thermal conductivity than that of glass and resin.

7. The vehicular lighting fixture according to claim 1, wherein the diaphragm includes a variable diaphragm having a variable diaphragm opening diameter, and a diaphragm value is changed according to a light distribution pattern to be projected.

8. The vehicular lighting fixture according to any one of claims 1 to 7, wherein the light source includes a multi-divided light emitting element in which many micro light emitting elements are arranged, and performs ADB light distribution control by controlling light emission from the micro light emitting elements.
